# EUROPEAN PATENT APPLICATION

(11) **EP 4 390 978 A1**
(43) Date of publication of application: **26.06.2024**
(21) Application number: 22899711.0
(22) Date of filing: 07.02.2022
(51) Int. Cl.: H01B 7/00, H01B 7/14, H01R 4/62

(54) **SUBMARINE CABLE HETEROGENEOUS CONDUCTOR AND PROCESSING METHOD THEREFOR, AND SUBMARINE CABLE AND PREPARATION METHOD THEREFOR**

(30) Priority: 30.11.2021 CN 202111453428
(71) Applicant: Zhongtian Technology Submarine Cable Co., Ltd., Nantong, Jiangsu 226010 (CN)
(72) Inventor: NIE, Ying, Nantong, Jiangsu 226010 (CN); XUE, Chi, Nantong, Jiangsu 226010 (CN); HU, Ming, Nantong, Jiangsu 226010 (CN); ZHANG, Hongliang, Nantong, Jiangsu 226010 (CN); WANG, Liyuan, Nantong, Jiangsu 226010 (CN); ZHAO, Youlin, Nantong, Jiangsu 226010 (CN); WANG, Haiyang, Nantong, Jiangsu 226010 (CN); WANG, Wenchao, Nantong, Jiangsu 226010 (CN); DU, Qiang, Nantong, Jiangsu 226010 (CN); SUN, Yanyu, Nantong, Jiangsu 226010 (CN); CAI, Hua, Nantong, Jiangsu 226010 (CN); CAO, Junjie, Nantong, Jiangsu 226010 (CN); QIU, Xingyu, Nantong, Jiangsu 226010 (CN)
(74) Representative: Curell Suñol S.L.P.
(86) International application number: PCT/CN2022/075416
(87) International publication number: WO 2023/097887

(57) **Abstract**

The present disclosure provides a submarine cable heterogeneous conductor and a processing method therefor, and a submarine cable and a preparation method therefor. The submarine cable heterogeneous conductor includes a first conductor, a second conductor, a third conductor, and a fourth conductor connected in sequence, the second conductor including a second conductor core, the third conductor including a third conductor core, the second conductor and the third conductor being conductors of different materials, the first conductor and the second conductor being conductors of the same material, the third conductor and the fourth conductor being conductors of the same material, the first conductor being a conductor formed by stranding and pressing first conductor metal wires, and the fourth conductor being a conductor obtained by stranding and pressing second conductor metal wires. The second conductor and the third conductor of different materials are friction welded to form an alloy structure of the two materials at the joint, so that an electrochemical reaction between the second conductor and the third conductor can be suppressed, and the strength of the copper-aluminum welding joint can also be effectively controlled, thereby improving the welding quality of the submarine cable heterogeneous conductor as a whole.

## Description

### Cross-Reference to Related Application

The present disclosure is based upon and claims priority to Chinese patent application No. 202111453428.8, filed on November 30, 2021, the disclosure of which is hereby incorporated by reference in its entirety.

### Technical Field

The present disclosure relates to the technical field of submarine cables, and in particular to a submarine cable heterogeneous conductor and a processing method therefor, and a submarine cable and a preparation method therefor.

### Background

A landing section of a submarine cable has harsh laying conditions, which is the bottleneck section for the carrying capacity of the submarine cable. Therefore, the design of the cross-section of most existing submarine cable conductors is based on the landing carrying capacity, which inevitably causes the problems of large carrying capacity margin and high cost of the submarine cable at a submarine section. The common solution is to increase the cross-section of the submarine cable conductor after landing, and connect the submarine cables with different diameters through factory joints or maintenance joints. However, whether the engineering joints or maintenance joints are used, the technology is only limited to a copper conductor, and cannot be implemented on an aluminum conductor submarine cable. Moreover, a copper core submarine cable is more expensive than an aluminum core submarine cable.

At this stage, the submarine cable homogenous metal factory joint technology is relatively mature, but there is a certain bottleneck in the heterogeneous conductor factory joint technology, due to different activities of different metals, the welding quality is difficult to control, for example, the aluminum is more active than copper. Since the common wire welding is seam welding, moisture in the air may infiltrate a flux core through a gap, which causes a welding seam to have an indentation due to a damp flux, and at the same time, the presence of water leads to an chemical reaction between the two, causing the oxidation of the aluminum over time, thereby making it difficult to guarantee the welding quality. The tensile strength and bending performance after ordinary welding are difficult to guarantee, and cannot meet the use performance of the submarine cable.

### Summary

The present disclosure mainly aims to provide a submarine cable heterogeneous conductor and a processing method therefor, and a submarine cable and a preparation method therefor, so as to solve the problem of poor welding quality of the submarine cable heterogeneous conductor in the related art.

In order to achieve the above purpose, according to one aspect of the present disclosure, a submarine cable heterogeneous conductor is provided, which includes a first conductor, a second conductor, a third conductor, and a fourth conductor connected in sequence, the second conductor including a second conductor core, the third conductor including a third conductor core, the second conductor and the third conductor being conductors of different materials, the second conductor and the third conductor being friction welded, the first conductor and the second conductor being conductors of the same material, the third conductor and the fourth conductor being conductors of the same material, the first conductor being a conductor formed by stranding and pressing first conductor metal wires, and the fourth conductor being a conductor obtained by stranding and pressing second conductor metal wires.

Further, the first conductor, the second conductor, the third conductor, and the fourth conductor are coaxially arranged with the same outer diameter.

Further, the second conductor further includes a first welding layer coaxially arranged with the second conductor core, the first welding layer being a first friction welding layer, the first welding layer including a plurality of first welding sections, the first welding sections being each independently a first sector-ring welding section, the inner diameters of the first sector-ring welding sections being the same and the outer diameters of the first sector-ring welding sections being the same, and the first welding layer and the second conductor being conductors of the same material. The third conductor includes a second welding layer coaxially arranged with the third conductor core, the second welding layer being a second friction welding layer, the second welding layer including a plurality of second welding sections, the second welding sections being each independently a second sector-ring welding section, the inner diameters of the second sector-ring welding sections being the same and the outer diameters of the second sector-ring welding sections being the same, the second welding layer and the third conductor being conductors of the same material, and the first sector-ring welding sections and the second sector-ring welding sections being friction welded in a one-to-one correspondence manner, and the first welding layer and the second welding layer being friction welded to form a first circular annular welding layer.

Further, one end, connected to the second conductor, of the first conductor is of a T-shaped structure, one end, connected to the third conductor, of the fourth conductor is of a T-shaped structure, one end, connected to the first conductor, of the first welding layer protrudes from the second conductor core by 10 to 20 mm, and one end, connected to the fourth conductor, of the second welding layer protrudes from the third conductor core by 10 to 20 mm.

Further, three to six first welding sections are provided, and three to six second welding sections are provided.

Further, the second conductor further includes a third welding layer, the third welding layer being a third friction welding layer, the third welding layer and the second conductor core being coaxially arranged on an outer surface of the first welding layer, the third welding layer including a plurality of third welding sections, the third welding sections being each independently a third sector-ring welding section, the inner diameters of the third sector-ring welding sections separately being the same and the outer diameters of the third sector-ring welding sections separately being the same, and the third welding sections and the second conductor being conductors of the same material. The third conductor further includes a fourth welding layer, the fourth welding layer being a fourth friction welding layer, the fourth welding layer and the third conductor core being coaxially arranged on an outer surface of the second welding layer, the fourth welding layer including a plurality of fourth welding sections, the fourth welding sections being each independently a fourth sector-ring welding section, the inner diameters of the fourth sector-ring welding sections being the same and the outer diameters of the fourth sector-ring welding sections being the same, the fourth welding sections and the third conductor being conductors of the same material, the third sector-ring welding sections and the fourth sector-ring welding sections being friction welded in a one-to-one correspondence manner, and the third welding layer and the fourth welding layer being friction welded to form a second circular annular welding layer.

Further, the first welding sections and the third welding sections are arranged in a staggered manner, and the second welding sections and the fourth welding sections are arranged in a staggered manner.

Further, one end, connected to the second conductor, of the first conductor is of a double-layer step structure, one end, connected to the third conductor, of the fourth conductor is of a double-layer step structure, one end, connected to the first conductor, of the first welding layer protrudes from the second conductor core by 10 to 20 mm, one end, connected to the first conductor, of the third welding layer protrudes from the first welding layer by 10 to 20 mm, one end, connected to the fourth conductor, of the second welding layer protrudes from the third conductor core by 10 to 20 mm, and one end, connected to the fourth conductor, of the fourth welding layer protrudes from the second welding layer by 10 to 20 mm.

Further, three to six third welding sections are provided, and three to six fourth welding sections are provided.

Further, the second conductor and the third conductor are one of a copper conductor and an aluminum conductor, respectively.

According to another aspect of the present disclosure, a processing method for the aforementioned submarine cable heterogeneous conductor is provided. The processing method includes: step S1, friction welding a second conductor to a third conductor; step S2, performing first ultrasonic partition welding on a first conductor and the second conductor in a nitrogen or inert atmosphere; and step S3, performing second ultrasonic partition welding on a fourth conductor and the third conductor in the nitrogen or inert atmosphere to obtain the submarine cable heterogeneous conductor.

Further, the step S1 includes: friction welding each first sector-ring welding section to a second conductor core to form a first welding layer, friction welding each third sector-ring welding section to an outer surface of the first welding layer to form a third welding layer to obtain the second conductor, friction welding each second sector-ring welding section to a third conductor core to form a second welding layer, friction welding each fourth sector-ring welding section to an outer surface of the second welding layer to form a fourth welding layer to obtain the third conductor, and friction welding the second conductor and the third conductor.

Further, the first ultrasonic partition welding and the second ultrasonic partition welding are ultrasonic layered welding in each area.

According to still another aspect of the present disclosure, a submarine cable is provided, which includes a power cable core, the power cable core including a non-metal sheath layer, a metal shield layer, an insulation shield layer, an insulating layer, a conductor shield layer, and a conductor arranged in sequence from outside to inside. The conductor is the aforementioned submarine cable heterogeneous conductor.

According to still another aspect of the present disclosure, a preparation method for the submarine cable is provided. The preparation method includes: performing the recovery of a conductor shield layer, the recovery of an insulating layer, the recovery of an insulation shield layer, the recovery of a metal shield layer, and the recovery of a non-metal sheath layer on a conductor in sequence. The recovery of the insulating layer includes: performing stress cone peeling, extrusion molding, and vulcanization on the insulating layer in sequence.

Further, the vulcanization is performed in a vulcanization mold, and an induction coil is arranged in the vulcanization mold.

By applying the technical solutions of the present disclosure, the second conductor and the third conductor of different materials in the submarine cable heterogeneous conductor of the present disclosure are friction welded to form an alloy structure of the two materials at the joint, so that an electrochemical reaction between the second conductor and the third conductor of different materials can be suppressed, thereby weakening the oxidation of the active metal such as aluminum, and the strength of the copper-aluminum welding joint can also be effectively controlled, thereby improving the welding quality of the submarine cable heterogeneous conductor as a whole.

### Brief Description of the Drawings

The drawings of the specification, which constitute a part of the present disclosure, are intended to provide a further understanding of the present disclosure, and the exemplary embodiments of the present disclosure and the description thereof are intended to explain the present disclosure and do not constitute an undue limitation on the present disclosure. In the drawings:
Fig. 1 shows a schematic diagram of a cylindrical submarine cable heterogeneous conductor according to Embodiment 1 of the present disclosure.
Fig. 2 shows a schematic diagram of a cross-section of a second conductor or a third conductor in Fig. 1 in a radial direction of a cylindrical submarine cable heterogeneous conductor.
Fig. 3 shows a schematic diagram of a cross-section of a second conductor or a third conductor in Fig. 1 in a radial direction of a cylindrical submarine cable heterogeneous conductor.
Fig. 4 shows a schematic diagram of a cross-section of a first conductor in Fig. 1 in a radial direction of a cylindrical submarine cable heterogeneous conductor.
Fig. 5 shows a schematic diagram of a cross-section of a fourth conductor in Fig. 1 in a radial direction of a cylindrical submarine cable heterogeneous conductor.
Fig. 6 shows a schematic diagram of an ultrasonic washing device for a monofilament of a fourth conductor 4 of Embodiment 1.
Fig. 7 shows a schematic diagram of an ultrasonic welding device of Embodiment 1.

Herein, the above drawings include the following reference signs.
1. first conductor; 2. second conductor; 3. third conductor; 4. fourth conductor; 21. second conductor core; 31. third conductor core; 231. first circular annular welding layer; 232. second circular annular welding layer; 01. washing tank; 02. fixed clamping apparatus; 03. water injection valve; 04. ultrasonic generator; 05. nitrogen tube; 06. metal placing cabin; 07. rotatable welding head; 08. ultrasonic generating apparatus; 09. first mold; 010. second mold; 011. third mold.

### Detailed Description of the Embodiments

It is to be noted that the embodiments in the present disclosure and features in the embodiments may be combined with each other without conflict. The present disclosure is described below with reference to the drawings and in conjunction with the embodiments in detail.

In order to solve the problem of poor welding quality of a submarine cable heterogeneous conductor in the related art, the present disclosure provides a submarine cable heterogeneous conductor and a processing method therefor, and a submarine cable and a preparation method therefor.

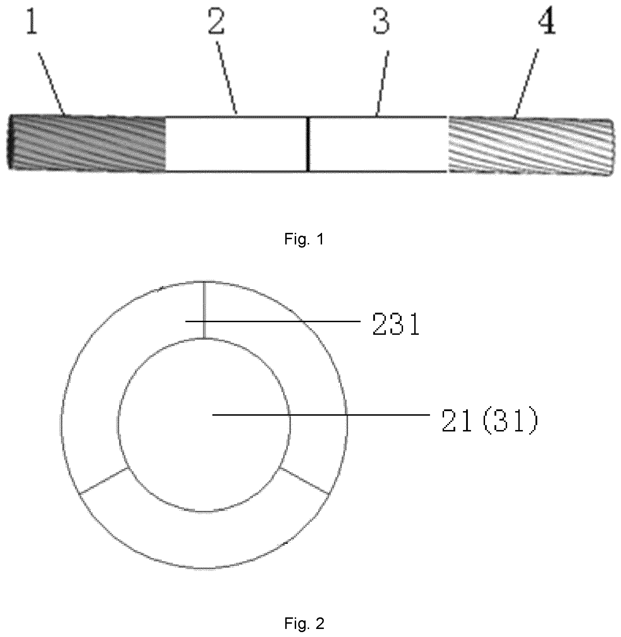

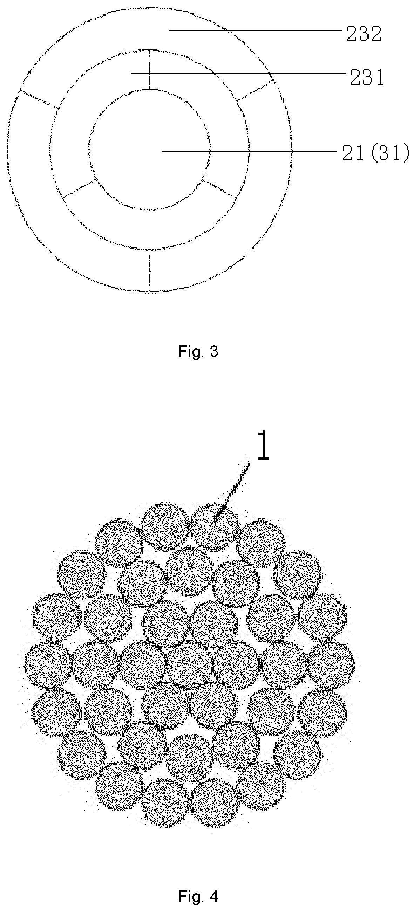

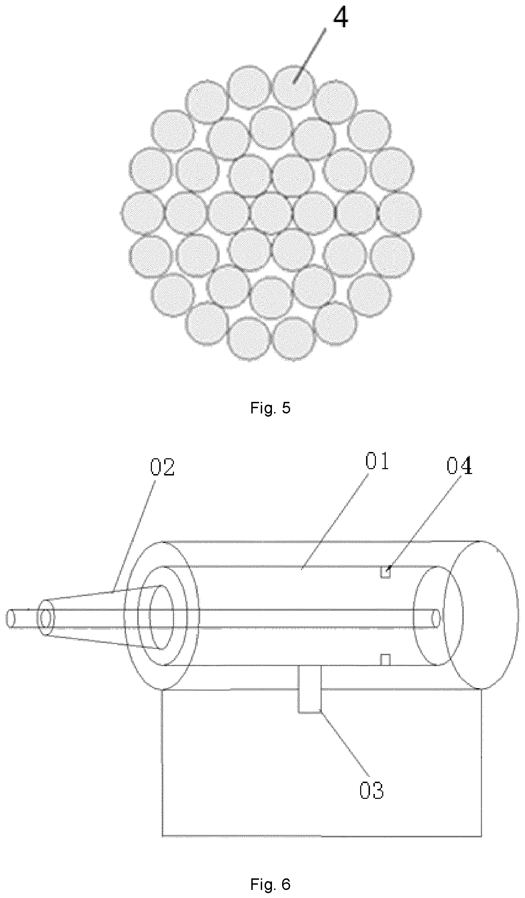

In a typical implementation of the present disclosure, a submarine cable heterogeneous conductor is provided, as shown in Fig. 1, the submarine cable heterogeneous conductor includes a first conductor 1, a second conductor 2, a third conductor 3, and a fourth conductor 4 connected in sequence, the second conductor 2 including a second conductor core 21, the third conductor 3 including a third conductor core 31, the second conductor 2 and the third conductor 3 being conductors of different materials, the second conductor 2 and the third conductor 3 being friction welded, the first conductor 1 and the second conductor 2 being conductors of the same material, the third conductor 3 and the fourth conductor 4 being conductors of the same material, as shown in Fig. 4, the first conductor 1 being a conductor formed by stranding and pressing first conductor metal wires, and as shown in Fig. 5, the fourth conductor 4 being a conductor obtained by stranding and pressing second conductor metal wires.

In the submarine cable heterogeneous conductor of the present disclosure, the second conductor 2 and the third conductor 3 of different materials are friction welded to form an alloy structure of the two materials at the joint, so that an electrochemical reaction between the second conductor 2 and the third conductor 3 of different materials can be suppressed, thereby weakening the oxidation of the active metal such as aluminum, and the strength of the copper-aluminum welding joint can also be effectively controlled, thereby improving the welding quality of the submarine cable heterogeneous conductor as a whole.

As shown in Fig.1, preferably, the first conductor 1, the second conductor 2, the third conductor 3, and the fourth conductor 4 are coaxially arranged with the same outer diameter, so that the parts, connected in pairs, of the first conductor 1, the second conductor 2, the third conductor 3, and the fourth conductor 4 are welded, thereby improving the overall tensile strength of the submarine cable heterogeneous conductor.

In one embodiment of the present disclosure, as shown in Fig. 2, the second conductor 2 further includes a first welding layer coaxially arranged with the second conductor core 21, the first welding layer being a first friction welding layer, the first welding layer including a plurality of first welding sections, the first welding sections being each independently a first sector-ring welding section, the inner diameters of the first sector-ring welding sections being the same and the outer diameters of the first sector-ring welding sections being the same, and the first welding layer and the second conductor 2 being conductors of the same material. The third conductor 3 includes a second welding layer coaxially arranged with the third conductor core 31, the second welding layer being a second friction welding layer, the second welding layer including a plurality of second welding sections, the second welding sections being each independently a second sector-ring welding section, the inner diameters of the second sector-ring welding sections being the same and the outer diameters of the second sector-ring welding sections being the same, the second welding layer and the third conductor 3 being conductors of the same material, and the first sector-ring welding sections and the second sector-ring welding sections being friction welded in a one-to-one correspondence manner, and the first welding layer and the second welding layer being friction welded to form a first circular annular welding layer 231. In the present disclosure, the second conductor 2 and the third conductor 3 are respectively welded to the first conductor 1 and the fourth conductor 4, and the first conductor 1 and the fourth conductor 4 are independently derived from some existing power cable cores of different specifications. When the radial cross-sectional areas of the first conductor 1 and the fourth conductor 4 are less than or equal to 120 mm², the second conductor core 21 and the third conductor core 31 having the same radial cross-sectional area as the first conductor 1 and the fourth conductor 4 are used, and the first conductor 1, the second conductor 2, the second conductor core 21, and the third conductor core 31 are welded in sequence to obtain the submarine cable heterogeneous conductor with high welding quality.

However, when the radial cross-sectional areas of the first conductor 1 and the fourth conductor 4 are greater than 120 mm², if the second conductor core 21 and the third conductor core 31 having the same radial cross-sectional area as the first conductor 1 and the fourth conductor 4 are directly used, the overall bending performance of the submarine cable heterogeneous conductor may be poor. Therefore, in the present disclosure, the first circular annular welding layer 231 is preferably arranged outside the second conductor core 21 and the third conductor core 31, and the first annular welding layer 231 is divided into the plurality of welding sections, so that the rigidity of the second conductor 2 and the third conductor 3 is relieved by using a welding surface between the welding sections, thereby improving the bending performance of the submarine cable heterogeneous conductor.

In one embodiment of the present disclosure, one end, connected to the second conductor 2, of the first conductor 1 is of a T-shaped structure, one end, connected to the third conductor 3, of the fourth conductor 4 is of a T-shaped structure, one end, connected to the first conductor 1, of the first welding layer protrudes from the second conductor core 21 by 10 to 20 mm, and one end, connected to the fourth conductor 4, of the second welding layer protrudes from the third conductor core 31 by 10 to 20 mm.

The first welding layer protrudes from the second conductor core 21 by 10 to 20 mm, and the second welding layer protrudes from the third conductor core 31 by 10 to 20 mm, which facilitates stronger welding between the first conductor 1 and the second conductor 2, and between the fourth conductor 4 and the third conductor 3 by using more welding surfaces, so that the tensile strength of the submarine cable heterogeneous conductor is considered while the bending performance of the submarine cable heterogeneous conductor is improved. The protruding parts of the first welding layer and the second welding layer are adapted to the T-shaped structure.

If the first welding sections/second welding sections are too few, some of the first welding sections/second welding sections may easily fall off or be damaged to have a significant impact on the performance of the submarine cable heterogeneous conductor, so that the effect is rapidly reduced, and if the first welding sections/second welding sections are too much, a complicated welding process may be easily caused, so that preferably, three to six first welding sections are provided, and three to six second welding sections are provided.

In another embodiment of the present disclosure, as shown in Fig. 3, the second conductor 2 further includes a third welding layer, the third welding layer being a third friction welding layer, the third welding layer and the second conductor core 21 being coaxially arranged on an outer surface of the first welding layer, the third welding layer including a plurality of third welding sections, the third welding sections being each independently a third sector-ring welding section, the inner diameters of the third sector-ring welding sections being the same and the outer diameters of the third sector-ring welding sections being the same, and the third welding sections and the second conductor 2 being conductors of the same material. The third conductor 3 further includes a fourth welding layer, the fourth welding layer being a fourth friction welding layer, the fourth welding layer and the third conductor core 31 being coaxially arranged on an outer surface of the second welding layer, the fourth welding layer including a plurality of fourth welding sections, the fourth welding sections being each independently a fourth sector-ring welding section, the inner diameters of the fourth sector-ring welding sections being the same and the outer diameters of the fourth sector-ring welding sections being the same, the fourth welding sections and the third conductor 3 being conductors of the same material, the third sector-ring welding sections and the fourth sector-ring welding sections being friction welded in a one-to-one correspondence manner, and the third welding layer and the fourth welding layer being friction welded to form a second circular annular welding layer 232.

As mentioned above, according to the specific sizes of the radial cross-sectional areas of the first conductor 1 and the fourth conductor 4, the second circular annular welding layer 232 may be arranged outside the first circular annular welding layer 231, so as to improve the bending performance of the submarine cable heterogeneous conductor as much as possible while meeting the size matching when the second conductor 2 and the third conductor 3 are respectively welded to the first conductor 1 and the fourth conductor 4.

Although the second circular annular welding layer 232 is arranged outside the first circular annular welding layer 231 to improve the bending performance of the submarine cable heterogeneous conductor, more welding surfaces appear on the submarine cable heterogeneous conductor. In order to consider the tensile strength of the submarine cable heterogeneous conductor, preferably, the first welding sections and the third welding sections are arranged in a staggered manner, and the second welding sections and the fourth welding sections are arranged in a staggered manner.

In one embodiment of the present disclosure, one end, connected to the second conductor 2, of the first conductor 1 is of a double-layer step structure, one end, connected to the third conductor 3, of the fourth conductor 4 is of a double-layer step structure, one end, connected to the first conductor 1, of the first welding layer protrudes from the second conductor core 21 by 10 to 20 mm, one end, connected to the first conductor 1, of the third welding layer protrudes from the first welding layer by 10 to 20 mm, one end, connected to the fourth conductor 4, of the second welding layer protrudes from the third conductor core 31 by 10 to 20 mm, and one end, connected to the fourth conductor 4, of the fourth welding layer protrudes from the second welding layer by 10 to 20 mm.

The double-layer step structure and the size of each welding layer protruding from the conductor/conductor core enable more welding surfaces to be formed when the first conductor 1 and the second conductor 2, and the fourth conductor 4 and the third conductor 3 are welded in pairs, thereby improving the tensile strength of the whole submarine cable heterogeneous conductor. The protruding parts of the first welding layer, the second welding layer, the third welding layer, and the fourth welding layer are adapted to the double-layer step structure.

As mentioned above, based on the same reason, in order to consider the quality of welding and the simplicity of the welding process, preferably, three to six third welding sections are provided, and three to six fourth welding sections are provided.

The second conductor 2 and the third conductor 3 are one of a copper conductor and an aluminum conductor, respectively.

The design of the cross-sectional area of most submarine cable conductors is based on the landing carrying capacity, which inevitably causes the problems of large carrying capacity margin and high cost of the submarine cable at a submarine section, and a copper core submarine cable is more expensive than an aluminum core submarine cable. In the present disclosure, preferably, the second conductor 2 and the third conductor 3 are one of the copper conductor and the aluminum conductor, respectively, so that current transmission is performed on the submarine laying section by using the aluminum conductor, and current transmission is performed on the carrying capacity bottleneck section such as the landing section by using the copper conductor, so that the requirement for the carrying capacity of the bottleneck section is met, the waste of non-ferrous metal resources is reduced, and the cost is reduced.

In another typical implementation of the present disclosure, a processing method for the submarine cable heterogeneous conductor is provided. The processing method includes: step S1, friction welding a second conductor 2 to a third conductor 3; step S2, performing first ultrasonic partition welding on a first conductor 1 and the second conductor 2 in a nitrogen or inert atmosphere; and step S3, performing second ultrasonic partition welding on a fourth conductor 4 and the third conductor 3 in the nitrogen or inert atmosphere to obtain the submarine cable heterogeneous conductor.

In the present disclosure, a plastic state is achieved by using heat generated by the mutual friction of welded end surfaces between the second conductor 2 and the third conductor 3, and high-strength welding is achieved by means of diffusion of atoms on the end surfaces and metallurgical reactions such as recrystallization. Moreover, the welding process does not require welding rods, solder or inert gas protection, all-round welding can be performed with good adaptability, high welding efficiency, and cracks, air holes, shrinkage cavities and other defects in the welding seam are avoided, thereby helping to improve the overall welding strength of the submarine cable heterogeneous conductor. The ultrasonic partition welding helps to reduce the probability of the oxidation of the active metal such as aluminum in the welding process as much as possible. The processing method in the present disclosure combines the advantages of friction welding and ultrasonic partition welding, so that the welding quality of the submarine cable heterogeneous conductor is relatively high.

Preferably, the step S1 includes: friction welding each first sector-ring welding section to a second conductor core 21 to form a first welding layer, friction welding each third sector-ring welding section to an outer surface of the first welding layer to form a third welding layer to obtain the second conductor 2, friction welding each second sector-ring welding section to a third conductor core 31 to form a second welding layer, friction welding each fourth sector-ring welding section to an outer surface of the second welding layer to form a fourth welding layer to obtain the third conductor 3, and friction welding the second conductor 2 and the third conductor 3, so that a first circular annular welding layer and a second circular annular welding layer are formed by friction welding the second conductor 2 and the third conductor 3 once, which not only improves the efficiency of friction welding, but also reduces the probability of differences caused by multiple times of friction welding.

Preferably, the first ultrasonic partition welding and the second ultrasonic partition welding are ultrasonic layered welding in each area, which helps to further reduce the probability of the oxidation of the active metal such as aluminum in the welding process.

In still another typical implementation of the present disclosure, a submarine cable is provided, which includes a power cable core, the power cable core including a non-metal sheath layer, a metal shield layer, an insulation shield layer, an insulating layer, a conductor shield layer, and a conductor arranged in sequence from outside to inside. The conductor is the aforementioned submarine cable heterogeneous conductor.

The submarine cable with the submarine cable heterogeneous conductor of the present disclosure has excellent bending performance and tensile strength, so that the requirement for the carrying capacity of the bottleneck segment can be met, and the cost is reduced.

In still another typical implementation of the present disclosure, a preparation method for the submarine cable is provided. The preparation method includes: performing the recovery of a conductor shield layer, the recovery of an insulating layer, the recovery of an insulation shield layer, the recovery of a metal shield layer, and the recovery of a non-metal sheath layer on a conductor in sequence. The recovery of the insulating layer includes: performing stress cone peeling, extrusion molding, and vulcanization on the insulating layer in sequence. When the submarine cable heterogeneous conductor of the present disclosure is used as the conductor of the submarine cable, the submarine cable heterogeneous conductor can be prepared by using the conventional preparation method for the submarine cable, thereby expanding the industrial applicability of the submarine cable heterogeneous conductor of the present disclosure.

In some embodiments, the vulcanization is performed in a vulcanization mold, and an induction coil is arranged in the vulcanization mold.

The crucial step in the preparation process of the submarine cable is the recovery of the insulating layer, especially due to different conductor materials and different absorbed heat, the temperature control in the insulation recovery process is complex, the quality is difficult to guarantee, the insulation is gradually thickened along with the increase of the voltage level, and in the traditional vulcanization heating manner, heat is transmitted from outside to inside, often leading to external over-crosslinking and incomplete internal crosslinking. In the present disclosure, in the process of performing vulcanization by using the vulcanization mold with the induction coil, heating is performed outside the vulcanization mold at the same time, so that the insulating layer is heated inside and outside at the same time, thereby effectively shortening the heating time, improving the vulcanization efficiency, improving the vulcanization degree, and then improving the quality of the submarine cable.

The beneficial effects of the present disclosure are described below in conjunction with specific embodiments and a comparative example.

### Embodiment 1

At first step, a copper monofilament (first conductor 1) and an aluminum monofilament (fourth conductor 4) were cleaned.

After straightening pretreatment, a copper power cable core a and an aluminum power cable core b (the radial cross-sectional areas of the copper power cable core a and the aluminum power cable core b were the same and less than 120 mm²) were placed on a special support for surface cleaning before operation by means of alcohol wiping and an air shower method. After cleaning, two power cable cores were dissected according to the predetermined sizes, and the layers were arranged in a T shape from outside to inside, and were a non-metal sheath layer, a metal shield layer, an insulation shield layer, an insulating layer, a conductor shield layer, and a conductor in sequence, where the insulating layer was longer than other component layers (needing stress cone stripping). Surface cleaning was performed again after the peeling of the structure of each layer.

A method for performing surface treatment on the monofilament of the first conductor 1 of the copper power cable core a was to soak in an acidic or alkaline solution, polish by a brush roller made of nylon or a 304# stainless steel wire, and naturally air-dry on a special recovery apparatus for a soft joint.

The monofilament of the fourth conductor 4 to be cleaned was placed in a washing tank 01 by using ultrasonic water washing (which might refer to an ultrasonic water washing device in Fig. 6), and fixed by a fixed clamping device 02, a water injection valve 03 was opened, a power supply was turned on, and an ultrasonic generator 04 worked. After cleaning the monofilament of the fourth conductor 4 for 30s, the monofilament of the fourth conductor 4 was deeply inserted into a small special nitrogen sealed tank for future use.

At second step, a copper conductor (second conductor core 21) and an aluminum conductor (third conductor core 31) were friction welded.

The cylindrical copper conductor (second conductor core 21) and the aluminum conductor (third conductor core 31) having a length of 15 mm and the same radial cross-sectional area of being less than 120 mm were taken respectively, where the radial cross-sectional areas of the second conductor core 21 and the third conductor core 31 were equal to the radial cross-sectional area of the copper power cable core a (aluminum power cable core b), respectively. The second conductor core 21 and the third conductor core 31 were welded by using a special device for friction welding (the second conductor core 21 was equivalent to the second conductor 2, and the third conductor core 31 was equivalent to the third conductor 3).

At third step, the second conductor 2 and the monofilament of the first conductor 1, and the third conductor 3 and the monofilament of the fourth conductor 4 were respectively welded by using ultrasonic layered welding.

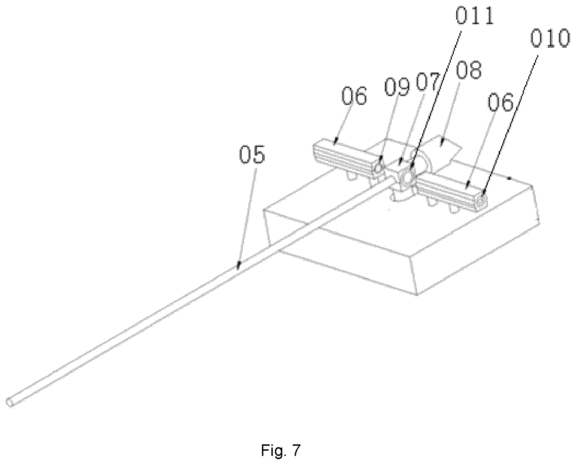

Referring to Fig. 7 (including a nitrogen tube 05, a metal placing cabin 06, a rotatable welding head 07, an ultrasonic generating apparatus 08, a first mold 09, a second mold 010, and a third mold 011), the copper monofilament was welded to a copper rod end and the aluminum monofilament was welded to the aluminum rod end by an ultrasonic welding device.

According to the outer diameters of the second conductor 2 and the third conductor 3, the appropriate mold 09 was selected and cleaned by an alcohol pad, and the alcohol pad was dipped into a certain amount of alcohol to wipe from one end to the other end in the same direction without changing the direction, which required that the sizes of the first mold 09 and the third mold 011 were the same, and the size of the second mold 010 was equal to the size of the first mold 09 + 0.1 mm.

The metal placing cabin 06 and the rotatable welding head 4 were opened, the cleaned first mold 09, the second mold 010, the third mold 011 and the second conductor 2 to be welded, the monofilament of the first conductor 1, the third conductor 3, and the monofilament of the fourth conductor 4 were perfectly mounted, and the metal placing cabin 06 was closed. The conductors placed into the metal bin must be of the same layer and the same length, and a distance between welding points of any two layers was required to be greater than 5 mm. A calibration button was pressed, so that the metal placing bin 06 and the rotatable welding head 4 were in the same horizontal plane, and opposite to the center of a metal section to be welded. A switch of a welding machine was pressed, the ultrasonic generating apparatus 08 worked, and meanwhile, the nitrogen tube 05 conveyed nitrogen to start the welding. Spin welding was performed by the rotatable welding head 4, after welding for 10 s, the calibration button was pressed, the metal placing cabin 06 returned to the original position, the metal placing cabin 06 was opened, the welded conductor was removed, and the welding was repeated many times until the second conductor 2 and the monofilament of the first conductor 1, and the third conductor 3 and the monofilament of the fourth conductor 4 were all welded to obtain the submarine cable heterogeneous conductor.

At fourth step, a conductor shield was recovered.

Quality confirmation was performed on a surface of the submarine cable heterogeneous conductor, surface cleaning was performed by the air shower method again, and the conductor was straightened to ensure that the copper power cable core a and the aluminum power cable core b were on the same horizontal plane. A semi-conductive binding tape was used for wrapping, the semi-conductive binding tape, the copper power cable core a, and the aluminum power cable core b used the same raw materials and had the same wrapping and lapping rate, and after binding, the conductor was preheated by using a drying gun at a high temperature of 80 to 90 °C.

The material of a recovered extruded conductor shield was the same as the materials of the copper power cable core a and the aluminum power cable core b, which was a semi-conductive self-adhesive tape. The conductor was tightly wrapped with the semi-conductive self-adhesive tape, and the inner shield layer was covered after both ends extended. A polytetrafluoroethylene insulation tape was wrapped around the semi-conductive tape, and the polytetrafluoroethylene insulation tape was heated by the high-temperature drying gun after winding to prevent high temperature direct contacting with an inner screen. Meanwhile, the semi-conductive self-adhesive tape was tightly connected into a whole in a case of ensuring the roundness by using a cylindrical tool.

After sticking, the polytetrafluoroethylene insulation tape was removed, the surface was polished to be smooth and rounded by using abrasive paper of 1000# or more, and the thickness of the semi-conductive self-adhesive tape after winding was equal to the thickness of a body extruded conductor shield. The polytetrafluoroethylene insulation tape was wrapped again, a prefabricated vulcanization mold was mounted and heated, where a heating temperature interval is 120 to 130 °C, the vulcanization time is 35 min. After the temperature dropped to the room temperature, the mold was removed, and the polytetrafluoroethylene insulation tape was taken.

At fifth step, an insulating layer was recovered.

The surface quality of the conductor shield was confirmed, and surface cleaning was performed again by alcohol and dust-free paper, requiring wiping from one end to the other end in the same direction without changing the direction. Stress cone peeling was performed on the insulating layer, and an angle of a stress cone was related to the specific size of the power cable core to pay attention to avoid the damage to the conductor shield. The thickness of the peeling at each time was required to be not greater than 1 mm, and the stress cone after peeling was wrapped with a transparent film to avoid the damage to the surface of the stress cone.

The cable was placed in an extrusion mold and the position of the cable core was adjusted again to ensure that the centers were opposite. The cable was placed in the extrusion mold, and the mold was covered and heated to 120 °C for 1 h.

After preheating the recovered insulation shield layer at a preheating temperature of 80 to 90 °C, extrusion molding was performed: an extruder was started first, the screw speed of the extruder was set to 7 to 9 rmp, then a downturning ball valve of a hopper of the extruder was opened, an insulation feeder was started, discharging is performed for 20 min, whether impurities and air holes exist in the insulation glue or not was observed, when the surface quality met the requirements, the extruder was closed, and an extruder head was connected to the extrusion mold. The mounting time did not exceed 2 min. The extruder was started again after the mounting, the extrusion temperature was set to 110 to 120 °C, the screw speed was set to 7 to 9 rmp, and extrusion was started. The insulation material added to the insulation feeder was consistent with the material of the body.

When the materials overflown at both ends of the extrusion mold, it indicated that the extrusion mold was full, and the extruder was closed.

When the temperature returned to the room temperature, the extrusion mold was removed and cleaned.

The vulcanization mold was selected according to the outer diameter of the cable, and the vulcanization mold was divided into an upper mold and a lower mold, which were connected by a positioning pin. A cable core to be vulcanized was placed in the vulcanization lower mold, the upper mold and the lower mold were aligned after accurate positioning, fixedly connected by the positioning pin, and fixed by using a sealing gasket and a sealant.

After sealing, a vulcanization tube was filled with nitrogen and heated, a nitrogen pressure value was greater than 1.3 MPa, and the temperature was greater than 200 °C.

The heating method adopted matching heating, a specific induction coil was arranged in the vulcanization mold, the surface of the vulcanization tube was heated by applying the temperature to the outside, and meanwhile, the internal induction coil inducted with the conductor, and the conductor generated heat to perform heating from the inside and outside at the same time, thereby effectively shortening the heating time, improving the vulcanization efficiency, and improving the vulcanization degree.

The surface of a joint to be vulcanized was provided with a temperature sensor, and the temperature was collected by software.

The vulcanization time was 240 min after waiting above 200 °C. After vulcanization, cooling and pressure relief were performed by water cooling. After cooling to the room temperature, the selected vulcanization mold was removed.

The insulating layer was recovered for structural inspection and repair.

The quality inspection was performed on the recovered insulating layer by X-ray inspection.

At sixth step, an insulation shield was recovered.

The material of a recovered extruded insulation shield was the same as the material of a body insulation shield, which was a semi-conductive self-adhesive tape. The insulation was tightly wrapped with the semi-conductive self-adhesive tape, and the insulation shield layer was covered after both ends extended. A polytetrafluoroethylene insulation tape was wrapped around the semi-conductive tape, and the polytetrafluoroethylene insulation tape was heated by the high-temperature drying gun after winding to prevent high temperature direct contacting with the insulation. Meanwhile, the semi-conductive self-adhesive tape was tightly connected into a whole in a case of ensuring the roundness by using the cylindrical tool.

After sticking, the polytetrafluoroethylene insulation tape was removed, and the surface was polished to be smooth and rounded by using the abrasive paper of 1000# or more.

The thickness of the semi-conductive self-adhesive tape after winding was equal to the thickness of a body extruded insulation shield.

The polytetrafluoroethylene insulation tape was wrapped again, a prefabricated vulcanization mold was mounted and heated, where a heating temperature interval was 120 to 130 °C, and the vulcanization time was 35 min. After the temperature dropped to the room temperature, the mold was removed, and the polytetrafluoroethylene insulation tape was taken.

At seventh step, after the non-metal sheath layer and the metal shield layer were recovered, an inner cushion layer, a metal armor layer, and an outer coating layer were added outside the power cable core in sequence to obtain the submarine cable.

### Embodiment 2

The differences between Embodiment 2 and Embodiment 1 were as follows.

In first step, the radial cross-sectional areas of a copper power cable core a and an aluminum power cable core b were the same and greater than 120 mm².

In second step, a cylindrical copper conductor (second conductor core 21) and an aluminum conductor (third conductor core 31) having a length of 15 mm and the same radial cross-sectional area were taken respectively.

Three first sector-ring welding sections were friction welded to the second conductor core 21 to form a first welding layer to obtain a second conductor 2, one end of the first welding layer was flush with one end of the second conductor core 21, the other end of the first welding layer protruded from the second conductor core 21 for 15 mm, and the radial cross-sectional areas of the second conductor 2 and the copper power cable core a were the same.

Three second sector-ring welding sections were friction welded to a third conductor core 31 to form a second welding layer to obtain a third second conductor 3, one end of the second welding layer was flush with one end of the third conductor core 31, the other end of the second welding layer protruded from the third conductor core 31 for 15 mm, and the radial cross-sectional areas of the third conductor 3 and the aluminum power cable core b are the same.

The flush end surfaces of the second conductor 2 and the third conductor 3 were welded together by a special friction welding device to form a first circular annular welding layer.

In third step, the area of the second conductor core 21 of the second conductor 2 and part of a monofilament of the first conductor 1 were welded by using ultrasonic layered welding, and the area of the first welding layer and the remaining monofilament of the first conductor 1 were welded by using ultrasonic layered welding.

The area of the third conductor core 31 of the third conductor 3 and part of a monofilament of the fourth conductor 4 were welded by using ultrasonic layered welding, and the area of the second welding layer and the remaining monofilament of the fourth conductor 4 were welded by using ultrasonic layered welding.

Referring to Fig. 7 (including a nitrogen tube 05, a metal placing cabin 06, a rotatable welding head 07, an ultrasonic generating apparatus 08, a first mold 09, a second mold 010, and a third mold 011), according to the outer diameters of the second conductor 2 and the third conductor 3, the appropriate mold 09 was selected and cleaned by an alcohol pad, the alcohol pad was dipped into a certain amount of alcohol to wipe from one end to the other end in the same direction without changing the direction, which required that the sizes of the first mold 09 and the third mold 011 were the same, and the size of the second mold 010 was equal to the size of the first mold 09 + 0.1 mm.

The metal placing cabin 06 and the rotatable welding head 4 were opened, the cleaned first mold 09, the second mold 010, the third mold 011 and the second conductor 2 to be welded, the monofilament of the first conductor 1, the third conductor 3, and the monofilament of the fourth conductor 4 were perfectly mounted, and the metal placing cabin 06 was closed. The conductors placed into the metal bin must be of the same layer and the same length, and a distance between welding points of any two layers was required to be greater than 5 mm. A calibration button was pressed, so that the metal placing bin 06 and the rotatable welding head 4 were in the same horizontal plane, and opposite to the center of a metal section to be welded. A switch of a welding machine was pressed, the ultrasonic generating apparatus 08 worked, and meanwhile, the nitrogen tube 05 conveyed nitrogen to start the welding. Spin welding was performed by the rotatable welding head 4, after welding for 10s, the calibration button was pressed, the metal placing cabin 06 returned to the original position, the metal placing cabin 06 was opened, the welded conductor was removed, and the welding was repeated many times until the second conductor 2 and the monofilament of the first conductor 1, and the third conductor 3 and the monofilament of the fourth conductor 4 were all welded to obtain a submarine cable heterogeneous conductor, and finally obtain a submarine cable.

### Embodiment 3

The differences between Embodiment 3 and Embodiment 2 were as follows.

In second step, a cylindrical copper conductor (second conductor core 21) and an aluminum conductor (third conductor core 31) having a length of 15 mm and the same radial cross-sectional area were taken respectively.

Three third sector-ring welding sections were friction welded to a first welding layer to form a third welding layer to obtain a second conductor 2, one end of the third welding layer was flush with one end of the second conductor core 21, the other end of the third welding layer protruded from the first welding layer for 15 mm, and the radial cross-sectional areas of the second conductor 2 and a copper power cable core a were the same.

Three fourth sector-ring welding sections were friction welded to a second welding layer to form a fourth welding layer to obtain a third conductor 3, one end of the fourth welding layer was flush with one end of the third conductor core 31, the other end of the fourth welding layer protruded from the second welding layer for 15 mm, and the radial cross-sectional areas of the third conductor and the aluminum power cable core b are the same.

The flush end surfaces of the second conductor 2 and the third conductor 3 were welded together by a special friction welding device to form a second circular annular welding layer.

In third step, the area of the second conductor core 21 of the second conductor 2 and part of a monofilament of the first conductor 1 were welded by using ultrasonic layered welding, the area of the first welding layer and part of the monofilament of the first conductor 1 were welded by using ultrasonic layered welding, and the area of the third welding layer and the remaining monofilament of the first conductor 1 were welded by using ultrasonic layered welding, furthermore, it was ensured that first welding sections and third welding sections were arranged in a staggered manner..

The area of the third conductor core 31 of the third conductor 3 and part of a monofilament of the fourth conductor 4 were welded by using ultrasonic layered welding, the area of the second welding layer and part of the monofilament of the fourth conductor 4 were welded by using ultrasonic layered welding, the area of the fourth welding layer and the remaining monofilament of the fourth conductor 4 were welded by using ultrasonic layered welding, and it was ensured that second welding sections and fourth welding sections were arranged in a staggered manner to obtain a submarine cable heterogeneous conductor, and finally obtain a submarine cable.

### Embodiment 4

The differences between Embodiment 4 and Embodiment 3 were as follows.

In third step, it was ensured that welding lines of a first welding layer and a third welding layer were in the same straight line, and welding lines of a second welding layer and a fourth welding layer are in the same straight line to obtain a submarine cable heterogeneous conductor, and finally obtain a submarine cable.

### Comparative Example 1

The differences between Comparative Example 1 and Embodiment 3 were as follows.

A second conductor core 21 and a third conductor core 31 were not provided, ultrasonic layered welding was directly performed on a monofilament of a first conductor 1 and a monofilament of a fourth conductor 4 by an ultrasonic welding device to obtain a submarine cable heterogeneous conductor, and finally obtain a submarine cable.

The bending performance and tensile strength of the submarine cable heterogeneous conductor obtained by Embodiments 1 to 4 and Comparative Example 1 were respectively tested by the submarine cable standard CIGRE TB 623, and test results were listed in Table 1.

**Table 1**

| Embodiment/Comparative Example | Bending performance | Tensile strength/MPa |
|---|---|---|
| Embodiment 1 | A tension bending test was performed at 12 times bending radius, and partial discharge, pressure resistance, and margin tests were all passed after the test was ended | 260 |
| Embodiment 2 | A tension bending test was performed at 12 times bending radius, and partial discharge, pressure resistance, and margin tests were all passed after the test was ended | 265 |
| Embodiment 3 | A tension bending test was performed at 12 times bending radius, and partial discharge, pressure resistance, and margin tests were all passed after the test was ended | 268 |
| Embodiment 4 | A tension bending test was performed at 12 times bending radius, and partial discharge, pressure resistance, and margin tests were all passed after the test was ended | 247 |
| Comparative Example 1 | A tension bending test was performed at 20 times bending radius, and partial discharge and pressure resistance tests were failed | 180 |

From the above description, it may be seen that the above embodiments of the present disclosure achieve the following technical effects.

The second conductor and the third conductor of different materials in the submarine cable heterogeneous conductor of the present disclosure are friction welded to form an alloy structure of the two materials at the joint, so that the electrochemical reaction between the second conductor and the third conductor of different materials can be suppressed, thereby weakening the oxidation of the active metal such as aluminum, and the strength of the copper-aluminum welding joint can also be effectively controlled, thereby improving the welding quality of the submarine cable heterogeneous conductor as a whole.

The above is only the preferred embodiments of the present disclosure, and is not intended to limit the present disclosure, and for those of ordinary skill in the art, various modifications and changes may be made to the present disclosure. Any modifications, equivalent substitutions, improvements, etc. within the spirit and scope of the present disclosure shall be included in the scope of protection of the present disclosure.

## Claims

1. A submarine cable heterogeneous conductor, comprising a first conductor (1), a second conductor (2), a third conductor (3), and a fourth conductor (4) connected in sequence, the second conductor (2) comprising a second conductor core (21), the third conductor (3) comprising a third conductor core (31), the second conductor (2) and the third conductor (3) being conductors of different materials, the second conductor (2) and the third conductor (3) being friction welded, the first conductor (1) and the second conductor (2) being conductors of the same material, the third conductor (3) and the fourth conductor (4) being conductors of the same material, the first conductor (1) being a conductor formed by stranding and pressing first conductor metal wires, and the fourth conductor (4) being a conductor obtained by stranding and pressing second conductor metal wires.

2. The submarine cable heterogeneous conductor according to claim 1, wherein the first conductor (1), the second conductor (2), the third conductor (3), and the fourth conductor are (4) are coaxially arranged with the same outer diameter.

3. The submarine cable heterogeneous conductor according to claim 1, wherein the second conductor (2) further comprises a first welding layer coaxially arranged with the second conductor core (21), the first welding layer being a first friction welding layer, the first welding layer comprising a plurality of first welding sections, the first welding sections being each independently a first sector-ring welding section, the inner diameters of the first sector-ring welding sections being the same and the outer diameters of the first sector-ring welding sections being the same, and the first welding layer and the second conductor (2) being conductors of the same material;
the third conductor (3) comprises a second welding layer coaxially arranged with the third conductor core (31), the second welding layer being a second friction welding layer, the second welding layer comprising a plurality of second welding sections, the second welding sections being each independently a second sector-ring welding section, the inner diameters of the second sector-ring welding sections being the same and the outer diameters of the second sector-ring welding sections being the same, the second welding layer and the third conductor (3) being conductors of the same material, and the first sector-ring welding sections and the second sector-ring welding sections being friction welded in a one-to-one correspondence manner; and
the first welding layer and the second welding layer are friction welded to form a first circular annular welding layer (231).

4. The submarine cable heterogeneous conductor according to claim 3, wherein one end, connected to the second conductor (2), of the first conductor (1) of a T-shaped structure, one end, connected to the third conductor (3), of the fourth conductor (4) is of a T-shaped structure, one end, connected to the first conductor (1), of the first welding layer protrudes from the second conductor core (21) by 10 to 20 mm, and one end, connected to the fourth conductor (4), of the second welding layer protrudes from the third conductor core (31) by 10 to 20 mm.

5. The submarine cable heterogeneous conductor according to claim 3, wherein three to six first welding sections are provided, and three to six second welding sections are provided.

6. The submarine cable heterogeneous conductor according to any one of claims 3 to 5, wherein the second conductor (2) further comprises a third welding layer, the third welding layer being a third friction welding layer, the third welding layer and the second conductor core (21) being coaxially arranged on an outer surface of the first welding layer, the third welding layer comprising a plurality of third welding sections, the third welding sections being each independently a third sector-ring welding section, the inner diameters of the third sector-ring welding sections being the same and the outer diameters of the third sector-ring welding sections being the same, and the third welding sections and the second conductor (2) being conductors of the same material;
the third conductor (3) further comprises a fourth welding layer, the fourth welding layer being a fourth friction welding layer, the fourth welding layer and the third conductor core (31) being coaxially arranged on an outer surface of the second welding layer, the fourth welding layer comprising a plurality of fourth welding sections, the fourth welding sections being each independently a fourth sector-ring welding section, the inner diameters of the fourth sector-ring welding sections being the same and the outer diameters of the fourth sector-ring welding sections being the same, the fourth welding sections and the third conductor (3) being conductors of the same material, and the third sector-ring welding sections and the fourth sector-ring welding sections being friction welded in a one-to-one correspondence manner; and
the third welding layer and the fourth welding layer are friction welded to form a second circular annular welding layer (232).

7. The submarine cable heterogeneous conductor according to claim 6, wherein the first welding sections and the third welding sections are arranged in a staggered manner, and the second welding sections and the fourth welding sections are arranged in a staggered manner.

8. The submarine cable heterogeneous conductor according to claim 6, wherein one end, connected to the second conductor (2), of the first conductor (1) is of a double-layer step structure, one end, connected to the third conductor (3), of the fourth conductor (4) is of a double-layer step structure, one end, connected to the first conductor (1), of the first welding layer protrudes from the second conductor core (21) by 10 to 20 mm, one end, connected to the first conductor (1), of the third welding layer protrudes from the first welding layer by 10 to 20 mm, one end, connected to the fourth conductor (4), of the second welding layer protrudes from the third conductor core (31) by 10 to 20 mm, and one end, connected to the fourth conductor (4), of the fourth welding layer protrudes from the second welding layer by 10 to 20 mm.

9. The submarine cable heterogeneous conductor according to claim 6, wherein three to six third welding sections are provided, and three to six fourth welding sections are provided.

10. The submarine cable heterogeneous conductor according to claim 1, wherein the second conductor (2) and the third conductor (3) are one of a copper conductor and an aluminum conductor, respectively.

11. A processing method for the submarine cable heterogeneous conductor according to any one of claims 1 to 10, comprising:
step S1, friction welding a second conductor (2) to a third conductor (3);
step S2, performing first ultrasonic partition welding on a first conductor (1) and the second conductor (2) in a nitrogen or inert atmosphere; and
step S3, performing second ultrasonic partition welding on a fourth conductor (4) and the third conductor (3) in the nitrogen or inert atmosphere to obtain the submarine cable heterogeneous conductor.

12. The processing method according to claim 11, wherein the step S1 comprises:
friction welding each first sector-ring welding section to a second conductor core (21) to form a first welding layer;
friction welding each third sector-ring welding section to an outer surface of the first welding layer to form a third welding layer to obtain the second conductor (2);
friction welding each second sector-ring welding section to a third conductor core (31) to form a second welding layer;
friction welding each fourth sector-ring welding section to an outer surface of the second welding layer to form a fourth welding layer to obtain the third conductor (3);
friction welding the second conductor (2) and the third conductor (3).

13. The processing method according to claim 11 or 12, wherein the first ultrasonic partition welding and the second ultrasonic partition welding are ultrasonic layered welding in each area.

14. A submarine cable, comprising a power cable core, the power cable core comprising a non-metal sheath layer, a metal shield layer, an insulation shield layer, an insulating layer, a conductor shield layer, and a conductor arranged in sequence from outside to inside, wherein the conductor is the submarine cable heterogeneous conductor according to any one of claims 1 to 10.

15. A preparation method for the submarine cable according to claim 14, wherein the preparation method comprises: performing the recovery of a conductor shield layer, the recovery of an insulating layer, the recovery of an insulation shield layer, the recovery of a metal shield layer, and the recovery of a non-metal sheath layer on a conductor in sequence, wherein the recovery of the insulating layer comprises: performing stress cone peeling, extrusion molding, and vulcanization on the insulating layer in sequence.

16. The preparation method according to claim 15, wherein the vulcanization is performed in a vulcanization mold, and an induction coil is arranged in the vulcanization mold.
